(19) Europäisches Patentamt / European Patent Office / Office européen des brevets

(11) **EP 3 938 259 B1**

(12) **FASCICULE DE BREVET EUROPEEN**

(45) Date de publication et mention de la délivrance du brevet:
**01.04.2026 Bulletin 2026/14**

(21) Numéro de dépôt: **20702479.5**

(22) Date de dépôt: **04.02.2020**

(51) Classification Internationale des Brevets (IPC):
**B60W 30/09** (2012.01)   **B60W 50/00** (2006.01)
**G05D 1/00** (2024.01)

(52) Classification Coopérative des Brevets (CPC):
**B60W 30/09; B60W 2050/0033; B60W 2050/0042;
B60W 2420/40; B60W 2420/408; B60W 2520/06;
B60W 2520/14; B60W 2540/18; B60W 2710/18;
B60W 2710/205; B60W 2710/207**

(86) Numéro de dépôt international:
**PCT/EP2020/052705**

(87) Numéro de publication internationale:
**WO 2020/182373 (17.09.2020 Gazette 2020/38)**

(54) **PROCÉDÉ DE PILOTAGE AUTONOME D'UNE MOBILITÉ D'UN APPAREIL**

VERFAHREN ZUR AUTONOMEN STEUERUNG DER MOBILITÄT EINER VORRICHTUNG

METHOD FOR AUTONOMOUSLY CONTROLLING A MOBILITY OF AN APPARATUS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.03.2019 FR 1902587**

(43) Date de publication de la demande:
**19.01.2022 Bulletin 2022/03**

(73) Titulaires:
• **Ampere SAS
92100 Boulogne-Billancourt (FR)**
• **NISSAN MOTOR Co., Ltd.
Yokohama-shi, Kanagawa 221-0023 (JP)**

(72) Inventeur: **DO, Anh Lam
92160 Antony (FR)**

(74) Mandataire: **Jacobacci & Partners France
32, rue de l'Arcade
75008 Paris (FR)**

(56) Documents cités:
• **LI LI ET AL: "An LMI approach to robust vehicle steering controller design", 2005 IEEE INTELLIGENT TRANSPORTATION SYSTEMS CONFERENCE (ITSC) ; VIENNA, AUSTRIA; 13 - 16 SEPTEMBER 2005, EEE, PISCATAWAY, NJ, USA, 13 September 2005 (2005-09-13), pages 360 - 365, XP010843050, ISBN: 978-0-7803-9215-1, DOI: 10.1109/ITSC.2005.1520075**
• **TANDALE M D ET AL: "Structured adaptive model inversion control with actuator saturation constraints applied to tracking spacecraft maneuvers", AMERICAN CONTROL CONFERENCE, 2004. PROCEEDINGS OF THE 2004 BOSTON, MA, USA JUNE 30-JULY 2, 2004, PISCATAWAY, NJ, USA,IEEE, 30 June 2004 (2004-06-30), pages 1031, XP031989593, ISBN: 978-0-7803-8335-7**
• **KIM DONGCHAN ET AL: "Local trajectory planning and control for autonomous vehicles using the adaptive potential field", 2017 IEEE CONFERENCE ON CONTROL TECHNOLOGY AND APPLICATIONS (CCTA), IEEE, 27 August 2017 (2017-08-27), pages 987 - 993, XP033162630, DOI: 10.1109/CCTA.2017.8062588**

• **AN HAO ET AL: "Sliding mode disturbance observer-enhanced adaptive control for the air-breathing hypersonic flight vehicle", ACTA ASTRONAUTICA, PERGAMON PRESS, ELMSFORD, GB, vol. 139, 29 June 2017 (2017-06-29), pages 111 - 121, XP085166130, ISSN: 0094-5765, DOI: 10.1016/ J.ACTAASTRO.2017.06.026**

**Description**

DOMAINE TECHNIQUE DE L'INVENTION

La présente invention concerne de manière générale l'automatisation du suivi de trajectoire d'appareils automobiles.

Elle trouve une application particulièrement avantageuse dans le cadre des aides à la conduite de véhicules automobiles, mais elle peut également s'appliquer au domaine de l'aéronautique ou de la robotique.

Elle concerne plus particulièrement un procédé de pilotage autonome d'une mobilité (c'est-à-dire d'un organe de commande de trajectoire) d'un appareil automobile, comportant des étapes de :

- acquisition de paramètres relatifs à une trajectoire de l'appareil, et de
- calcul d'une nouvelle consigne de pilotage de la mobilité de l'appareil en fonction desdits paramètres.

Elle concerne aussi un appareil équipé d'un calculateur adapté à mettre en œuvre ce procédé.

ETAT DE LA TECHNIQUE

Dans un souci de sécurisation des véhicules automobiles, on équipe actuellement ces derniers de systèmes d'aide à la conduite ou de système de conduite autonome. Le document 10.1 109/ITSC.2005.1520075, par exemple, présente des techniques de contrôle robuste pour les véhicules. Le document 10.23919/ ACC.2004.1386707 se concentre sur le contrôle en présence de saturations des actionneurs.

Parmi ces systèmes, on connait notamment les systèmes de freinage d'urgence automatique (plus connu sous l'abréviation AEB, de l'anglais « Automatic Emergency Braking »), conçus pour éviter toute collision avec des obstacles situés dans la voie empruntée par le véhicule, en agissant simplement sur le système de freinage conventionnel du véhicule automobile.

Il existe toutefois des situations dans lesquelles ces systèmes de freinage d'urgence ne permettent pas d'éviter la collision ou ne sont pas utilisables (par exemple si un engin suit de près le véhicule automobile).

Pour ces situations, il a été développé des systèmes d'évitement automatique (plus connu sous l'abréviation AES, de l'anglais « Automatic Evasive Steering » ou « Automatic Emergency Steering ») qui permettent d'éviter l'obstacle en déviant le véhicule de sa trajectoire, soit en agissant sur la direction du véhicule, soit en agissant sur le système de freinage différentiel du véhicule.

Il arrive toutefois que le système AES impose au véhicule une trajectoire limite en termes de contrôlabilité, qui ne permet pas au conducteur de reprendre la main sur la conduite du véhicule en toute sécurité.

PRESENTATION DE L'INVENTION

Afin de remédier à l'inconvénient précité de l'état de la technique, la présente invention propose d'utiliser un contrôleur adapté à élaborer une consigne de pilotage qui limite la vitesse du changement de direction imposé à l'appareil automobile.

Plus particulièrement, on propose selon l'invention un procédé de pilotage selon la revendication 1.

Ainsi, grâce à l'invention, la consigne de pilotage est déterminée de façon native pour restreindre la vitesse de variation de la mobilité considérée.

Préférentiellement, l'appareil est un véhicule automobile qui est adapté à rouler sur route et qui comprend au moins une roue directrice, ladite mobilité correspond à la capacité de chaque roue directrice à braquer, et la consigne de pilotage est une consigne saturée d'angle de braquage de chaque roue directrice.

Dans ce cas particulier, l'angle de braquage est donc directement calculé de façon à ne pas pouvoir varier trop vite, ce qui permet au conducteur du véhicule de pouvoir reprendre la main sur la conduite du véhicule en toute sécurité et qui permet de ne pas dépasser les capacités de suivi de trajectoire du véhicule.

L'invention s'applique particulièrement au cas où la trajectoire du véhicule est une trajectoire d'évitement d'un obstacle situé sur la route empruntée par le véhicule. Dans ce cas particulier, il faut que le véhicule réagisse rapidement et en toute sécurité, en suivant la trajectoire souhaitée avec un faible délai de réponse.

D'autres caractéristiques avantageuses et non limitatives du procédé conforme à l'invention, prises individuellement ou selon toutes les combinaisons techniquement possibles, sont les suivantes :

- la valeur calculée à l'aide de la fonction tangente hyperbolique est calculée au moyen de l'expression mathématique :

$$\theta = \frac{tanh\left(\alpha\left(\delta_K - \delta_{ref}\right)\right)}{\alpha\left(\delta_K - \delta_{ref}\right)}$$

où $\alpha$ est une constante prédéterminée,

$\delta_K$ est la consigne non saturée de l'angle de braquage, et
$\delta_{rer}$ est la consigne saturée de l'angle de braquage ;

- les paramètres comprennent au moins une vitesse de lacet r de l'appareil et/ ou un angle relatif de cap $\Psi_L$ entre l'axe longitudinal de l'appareil et une tangente à la trajectoire .

L'invention porte aussi sur un procédé d'élaboration d'un contrôleur en vue de son utilisation dans un procédé de pilotage tel que précité, dans laquelle il est prévu de :

- acquérir un modèle matriciel comportemental de l'appareil,
- déterminer une partie au moins des coefficients des matrices du modèle matriciel comportemental,
- en déduire un contrôleur qui satisfait, d'une part, le suivi d'une trajectoire à emprunter, et, d'autre part, un modèle limiteur de variation de consigne de pilotage.

Préférentiellement alors, le contrôleur est déterminé à partir de critères d'optimisation convexe sous contraintes d'inégalités matricielles linéaires.

L'invention concerne aussi un appareil automobile comprenant au moins une mobilité qui est adaptée à influer sur la trajectoire dudit appareil, un actionneur pour commander ladite mobilité, et un calculateur pour piloter ledit actionneur, qui est adapté à mettre en oeuvre un procédé tel que précité.

Avantageusement alors, cet appareil est formé par un véhicule automobile adapté à rouler sur route et comprenant au moins une roue directrice, ladite mobilité correspondant alors à la capacité de chaque roue directrice à braquer.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres et où un tel objet entre dans le champ des revendications annexées.

La description qui va suivre en regard des dessins annexés, donnés à titre d'exemples non limitatifs, fera bien comprendre en quoi consiste l'invention et comment elle peut être réalisée.

Sur les dessins annexés :

[Fig. 1] est une vue schématique de dessus d'un véhicule automobile circulant sur une route, sur laquelle la trajectoire que ce véhicule doit emprunter est représentée ;
[Fig. 2] est une vue schématique en perspective du véhicule automobile de la figure 1, représenté dans quatre positions successives situées le long d'une trajectoire d'évitement d'un obstacle ;
[Fig. 3] est un graphique illustrant les variations d'une fonction tangente hyperbolique ;
[Fig. 4] est un schéma illustrant la fonction de transfert en boucle fermée utilisée pour piloter le véhicule automobile ;
[Fig. 5] est un graphique illustrant les variations d'une fonction $\theta$ utilisée pour piloter le véhicule automobile ;
[Fig. 6] est un graphique illustrant un algorithme de pilotage du véhicule selon un procédé conforme à l'invention.

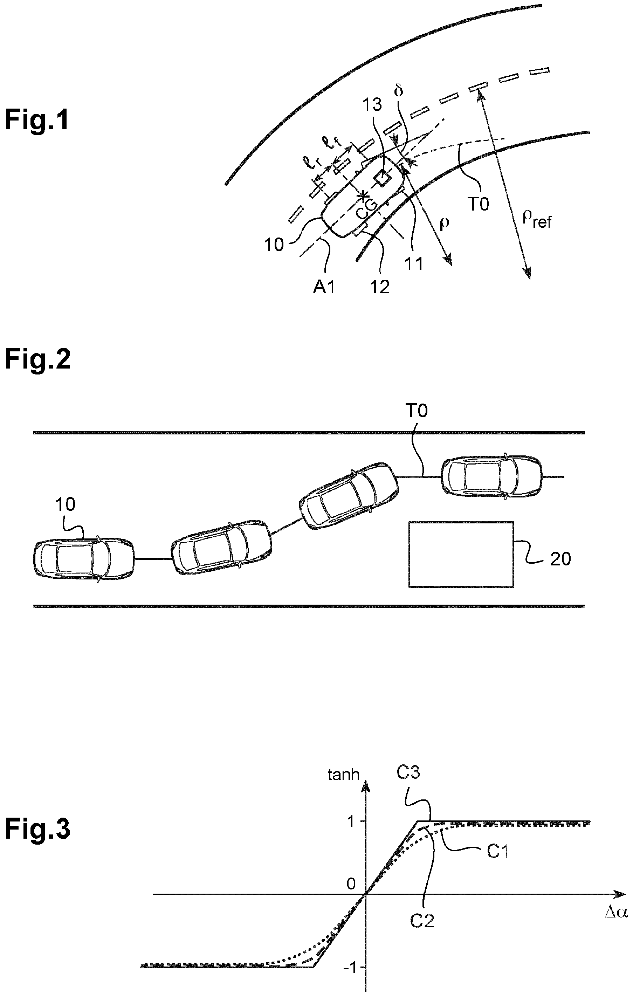

Sur la figure 1, on a représenté un véhicule automobile 10 comprenant classiquement un châssis qui délimite un habitacle, deux roues avant 11 directrices, et deux roues arrière 12 non directrices. En variante, ces deux roues arrière pourraient également être directrices.

Ce véhicule automobile 10 comporte un système de direction conventionnel permettant d'agir sur l'orientation des roues avant 11 de façon à pouvoir faire tourner le véhicule. Ce système de direction conventionnel comprend notamment un volant connecté à des biellettes afin de faire pivoter les roues avant 11. Dans l'exemple considéré, il comporte également un actionneur permettant d'agir sur l'orientation des roues avant en fonction de l'orientation du volant et/ou en fonction d'une requête reçue d'un calculateur 13.

En complément, on pourra éventuellement prévoir que ce véhicule automobile comporte un système de freinage différentiel permettant d'agir différemment sur les vitesses de rotation des roues avant 11 (et sur celles des roues arrière 12) de façon à ralentir le véhicule automobile en le faisant tourner. Ce système de freinage différentiel comprend par exemple un différentiel piloté ou des moteurs électriques placés au niveau des roues du véhicule.

Dans la suite de cet exposé, le système de direction considéré sera formé par le seul système de direction conventionnel. En variante, il pourrait être formé par la combinaison du système de direction conventionnel et du système de freinage différentiel.

Le calculateur 13 est alors prévu pour piloter l'actionneur de direction assistée. Il comporte à cet effet au moins un processeur, au moins une mémoire et différentes interfaces d'entrée et de sortie.

Grâce à ses interfaces d'entrée, le calculateur 13 est adapté à recevoir des signaux d'entrée provenant de différents capteurs.

Parmi ces capteurs, il est par exemple prévu :

- un dispositif tel qu'une caméra frontale, permettant de repérer la position du véhicule par rapport à sa voie de circulation,
- un dispositif tel qu'un télédétecteur RADAR ou LIDAR, permettant de détecter un obstacle 20 se trouvant sur la trajectoire du véhicule automobile 10 (figure 2),
- un dispositif tel qu'un gyromètre, permettant de déterminer la vitesse de rotation en lacet (autour d'un axe vertical) du véhicule automobile 10, et
- un capteur de position et de vitesse angulaire du volant.

Grâce à ses interfaces de sortie, le calculateur 13 est adapté à transmettre une consigne à l'actionneur de direction assistée.

Il permet ainsi de forcer le véhicule à suivre une trajectoire d'évitement T0 de l'obstacle 20.

Grâce à sa mémoire, le calculateur 13 mémorise des données utilisées dans le cadre du procédé décrit ci-dessous.

Il mémorise notamment une application informatique, constituée de programmes d'ordinateur comprenant des instructions dont l'exécution par le processeur permet la mise en œuvre par le calculateur du procédé décrit ci-après.

Avant de décrire ce procédé, on peut introduire les différentes variables qui seront utilisées, dont certaines sont illustrées sur la figure 1.

La masse totale du véhicule automobile sera notée « m » et sera exprimée en kg.

L'inertie du véhicule automobile autour d'un axe vertical passant par son centre de gravité CG sera notée « J » et sera exprimée en N.m.

La distance entre le centre de gravité CG et l'essieu avant du véhicule sera notée « $I_f$ » et sera exprimée en mètres.

La distance entre le centre de gravité CG et l'essieu arrière sera notée « $I_r$ » et sera exprimée en mètres.

Le coefficient de rigidité de dérive des roues avant sera noté « Cr » et sera exprimé en N/rad.

Le coefficient de rigidité de dérive des roues arrière sera noté « $C_r$ » et sera exprimé en N/rad.

Ces coefficients de rigidité de dérive des roues sont des notions bien connues de l'homme du métier. A titre d'exemple, le coefficient de rigidité de dérive des roues avant est ainsi celui qui permet d'écrire l'équation $F_f = 2.C_f.\alpha_f$, avec $F_f$ la force latérale de glissement des roues avant et $\alpha_f$ l'angle de dérive des roues avant.

L'angle de braquage que font les roues avant directrices avec l'axe longitudinal A1 du véhicule automobile 10 sera noté « $\delta$ » et sera exprimé en rad.

La variable $\delta_{ref}$, exprimée en rad, désignera la consigne saturée d'angle de braquage, telle qu'elle sera transmise à l'actionneur de direction assistée.

La variable $\delta_K$, exprimée en rad, désignera la consigne non saturée d'angle de braquage. A ce stade, on pourra seulement préciser que le concept de saturation sera lié à une limite de vitesse de braquage qui ne sera pas nécessairement respectée avec la variable $\delta_K$, mais qui le sera avec la variable $\delta_{ref}$.

La vitesse de lacet du véhicule (autour de l'axe vertical passant par son centre de gravité CG) sera notée « r » et sera exprimée en rad/s.

L'angle relatif de cap entre l'axe longitudinal A1 du véhicule et la tangente à la trajectoire d'évitement T0 (trajectoire souhaitée du véhicule) sera noté « $\Psi_L$ » et sera exprimé en rad.

L'écart latéral entre l'axe longitudinal A1 du véhicule automobile 10 (passant par le centre de gravité CG) et la trajectoire d'évitement T0, à une distance de visée « Is » située à l'avant du véhicule, sera noté « $y_L$ » et sera exprimé en mètres.

La consigne d'écart latéral entre l'axe longitudinal A1 du véhicule automobile 10 (passant par le centre de gravité CG) et la trajectoire d'évitement T0, à une distance de visée « Is » située à l'avant du véhicule, sera notée « $y_{L-ref}$ » et sera exprimée en mètres.

L'erreur de suivi de trajectoire sera noté « $e_{yL}$ » et sera exprimé en mètres. Il sera égal à la différence entre la consigne d'écart latéral $y_{L-ref}$ et l'écart latéral $y_L$.

La distance de visée « Is » précitée sera mesurée à partir du centre de gravité CG et s'exprimera en mètres.

L'angle de dérive du véhicule automobile 10 (angle que fait le vecteur vitesse du véhicule automobile avec son axe longitudinal A1) sera noté « $\beta$ » et sera exprimé en rad.

La vitesse du véhicule automobile selon l'axe longitudinal A1 sera noté « V » et s'exprimera en m/s.

P et Q seront des matrices de dimensions appropriées, positives et symétriques, telles que Q = P$^{-1}$. L'expression exact de ces matrices apparaitra plus clairement à la lecture de la suite de cet exposé.

Les constantes $\xi$ et $\omega$ représenteront des caractéristiques dynamiques de l'angle de braquage des roues avant du véhicule.

La constante $\omega_f$ représentera quant à elle une caractéristique dynamique d'une perturbation arbitraire w bornée appliquée au véhicule.

Avant de décrire le procédé qui sera exécuté par le calculateur pour mettre en œuvre l'invention, on pourra dans une première partie de cet exposé décrire les calculs qui ont permis d'aboutir à l'invention, de façon à bien comprendre d'où proviennent ces calculs et sur quels ressorts ils s'appuient.

On considérera ici que le comportement dynamique du véhicule peut être modélisé au moyen de l'équation suivante.

[Math 1]

$$\begin{pmatrix} \dot{\beta} \\ \dot{r} \\ \dot{\psi}_L \\ \dot{e}_{y_L} \\ \ddot{\delta} \\ \dot{\delta} \\ \ddot{y}_{L\_ref} \end{pmatrix} = \begin{bmatrix} -\dfrac{C_f + C_r}{mV} & 1 + \dfrac{C_r l_r - C_f l_f}{mV^2} & 0 & 0 & 0 & \dfrac{C_f}{mV} & 0 \\ -\dfrac{C_f l_f - C_r l_r}{J} & -\dfrac{C_r l_r^2 + C_f l_f^2}{JV} & 0 & 0 & 0 & \dfrac{C_f l_f}{J} & 0 \\ 0 & 1 & 0 & 0 & 0 & 0 & 0 \\ V & l_s & V & 0 & 0 & 0 & -1 \\ 0 & 0 & 0 & 0 & -2\xi\omega & -\omega^2 & 0 \\ 0 & 0 & 0 & 0 & 1 & 0 & 0 \\ 0 & 0 & 0 & 0 & 0 & 0 & -\omega_f \end{bmatrix} \begin{pmatrix} \beta \\ r \\ \psi_L \\ e_{y_L} \\ \dot{\delta} \\ \delta \\ \dot{y}_{L\_ref} \end{pmatrix} + \begin{bmatrix} 0 \\ 0 \\ 0 \\ 0 \\ \omega^2 \\ 0 \\ 0 \end{bmatrix} \delta_{ref} + \begin{bmatrix} 0 \\ 0 \\ 0 \\ 0 \\ 0 \\ 0 \\ \omega_f \end{bmatrix} w$$

Ce modèle est un modèle bicyclette amélioré.

Il ne permet toutefois pas de limiter la vitesse de braquage des roues avant 11 du véhicule. Or une telle limitation s'avère particulièrement importante pour assurer au conducteur du véhicule d'être en mesure de reprendre le contrôle du véhicule à tout moment.

Une telle limitation peut s'exprimer à l'aide de l'équation suivante.

[Math 2]

$$\left| \dot{\delta}_{ref} \right| \leq v$$

Dans cette équation, le coefficient v est une constante qui représente la vitesse de braquage à ne pas dépasser. Cette constante est définie soit par calcul, soit à l'issue d'une campagne d'essais réalisés sur un véhicule test.

Selon l'invention, on souhaite limiter la vitesse de braquage des roues directrices 11 non pas en imposant un seuil brutal, mais plutôt en utilisant un limiteur de variation de consigne (plus connu sous l'expression anglaise « rate limiter »).

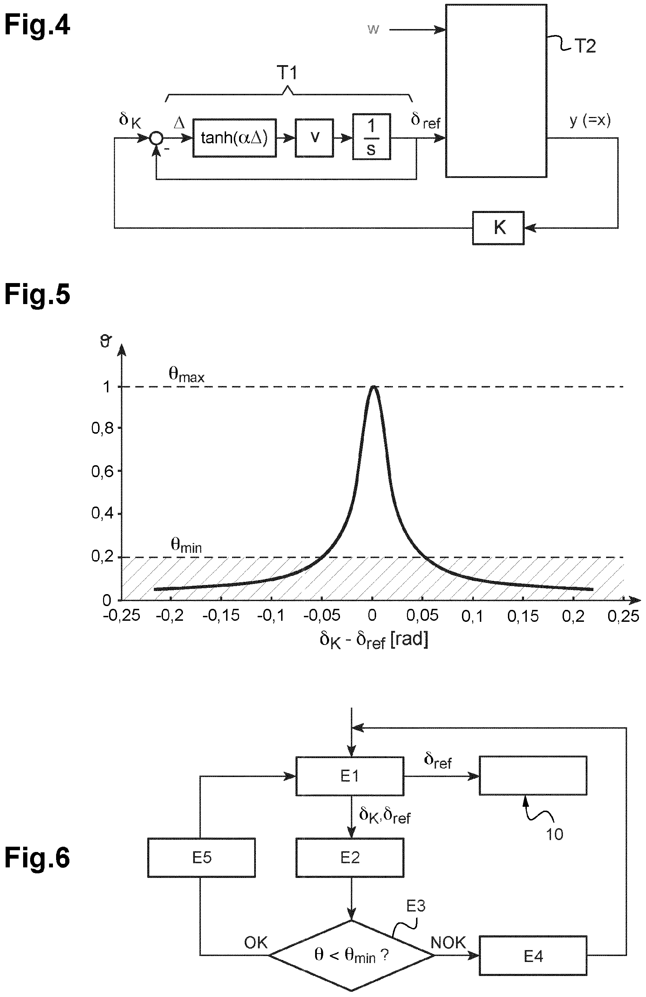

Comme le montre la figure 4, ce limiteur de variation de consigne T1 est ici particulier en ce sens qu'il fonctionne en boucle fermée et qu'il présente une fonction de transfert en v/s et un correcteur qui est une fonction tangente hyperbolique. Il reçoit en entrée la consigne non saturée d'angle de braquage $\delta_K$ et transmet en sortie la consigne saturée d'angle de braquage $\delta_{ref}$.

Sur cette figure, le coefficient $\Delta$ correspond à l'écart entre les variables $\delta_{ref}$ et $\delta_K$. Le coefficient $\alpha$ est une constante comprise entre 0 et l'infini, qui est le seul paramètre permettant de jouer sur le caractère rapide ou souple du limiteur de variation de consigne T1.

Comme le montre la figure 3, l'utilisation d'un tel correcteur permet non seulement de bien limiter les variations d'angle de braquage, mais en outre d'assurer une continuité de la variation de la consigne saturée d'angle de braquage $\delta_{ref}$.

La courbe C1 montre ainsi que cette variation de consigne peut être lisse et souple (avec un coefficient $\alpha$ faible), ou plus rapide comme le montre la courbe C2 (la courbe C3 correspond à un coefficient $\alpha$ infini).

Ce limiteur de variation de consigne T1 a pour avantage d'être simple à mettre au point puisqu'il suffit de régler le coefficient $\alpha$. Il permet d'assurer une commande continue et lisse (infiniment dérivable). Surtout, il peut être directement pris en compte dans le modèle de comportement dynamique du véhicule défini par l'équation Math 1, en vue de calculer une consigne d'angle de braquage du véhicule.

Pour cela, compte tenu de la forme de ce limiteur de variation de consigne T1, on peut écrire :

[Math 3]

$$\dot{\delta}_{ref} = v.\tanh\left(\alpha\left(\delta_K - \delta_{ref}\right)\right)$$

Cette équation peut également s'écrire sous la forme :

[Math 4]

$$\dot{\delta}_{ref} = v\frac{\tanh\left(\alpha\left(\delta_K - \delta_{ref}\right)\right)}{\alpha\left(\delta_K - \delta_{ref}\right)}\alpha\left(\delta_K - \delta_{ref}\right)$$

On peut alors introduire le paramètre θ suivant :

[Math 5]

$$\theta = \frac{\tanh\left(\alpha\left(\delta_K - \delta_{ref}\right)\right)}{\alpha\left(\delta_K - \delta_{ref}\right)}$$

Puis réécrire l'équation Math 4 sous la forme :

[Math 6]

$$\dot{\delta}_{ref} = -v.\alpha.\theta.\delta_{ref} + v.\alpha.\theta.\delta_K$$

Cette équation Math 6 est caractéristique d'une représentation d'état et elle montre que le modèle de limiteur de variation de consigne T1 est linéaire en fonction du paramètre θ.

On peut alors enrichir le modèle bicyclette de l'équation Math 1 avec cette représentation d'état pour obtenir un nouveau modèle qui s'écrit :

[Math 7 ]

$$\begin{pmatrix} \dot{\beta} \\ \dot{r} \\ \dot{\psi}_L \\ \dot{e}_{y_L} \\ \dot{\delta} \\ \ddot{\delta} \\ \ddot{y}_{L_{ref}} \\ \dot{\delta}_{ref} \end{pmatrix} = \begin{bmatrix} -\dfrac{C_f + C_r}{mV} & 1+\dfrac{C_r l_r - C_f l_f}{mV^2} & 0 & 0 & 0 & \dfrac{C_f}{mV} & 0 & 0 \\ \dfrac{C_f l_f - C_r l_r}{J} & -\dfrac{C_r l_r^2 + C_f l_f^2}{JV} & 0 & 0 & 0 & \dfrac{C_f l_f}{J} & 0 & 0 \\ 0 & 1 & 0 & 0 & 0 & 0 & 0 & 0 \\ V & l_s & V & 0 & 0 & 0 & -1 & 0 \\ 0 & 0 & 0 & 0 & -2\zeta\omega & -\omega^2 & 0 & \omega^2 \\ 0 & 0 & 0 & 0 & 1 & 0 & 0 & 0 \\ 0 & 0 & 0 & 0 & 0 & 0 & -\omega_f & 0 \\ 0 & 0 & 0 & 0 & 0 & 0 & 0 & -v\alpha\theta \end{bmatrix} \begin{pmatrix} \beta \\ r \\ \psi_L \\ e_{y_L} \\ \delta \\ \dot{\delta} \\ \dot{y}_{L\_ref} \\ \delta_{ref} \end{pmatrix} + \begin{bmatrix} 0 \\ 0 \\ 0 \\ 0 \\ 0 \\ 0 \\ 0 \\ v\alpha\theta \end{bmatrix}\delta_K + \begin{bmatrix} 0 \\ 0 \\ 0 \\ 0 \\ 0 \\ 0 \\ \omega_f \\ 0 \end{bmatrix}w$$

Sur la figure 4, on a représenté sous la forme d'une boucle fermée le modèle comportemental du véhicule, où T2 représente le modèle du véhicule donné par l'équation Math 1.

Dans cette boucle, ce modèle T2 reçoit en entrée la consigne d'angle de braquage saturée $\delta_{ref}$ et les perturbations w.

Sur la base de ce modèle T2 et grâce aux résultats de mesure fournis par des capteurs, il est possible d'obtenir un vecteur de sortie y, ici considéré égale à un vecteur d'état x que l'on peut écrire sous la forme :

$$x = \begin{pmatrix} \beta & r & \psi_L & e_{y_L} & \dot{\delta} & \delta & \dot{y}_{L\_ref} & \delta_{ref} \end{pmatrix}^T$$

Sur cette figure 4, on a également représenté le limiteur de variation de consigne T1.

L'objectif est alors de déterminer la forme du contrôleur K qui est le retour d'état permettant de calculer la consigne d'angle de braquage non saturée $\delta_K$ sur la base de ce vecteur d'état x.

Pour comprendre comment déterminer un contrôleur K qui convienne tant en terme de stabilité que de rapidité, on peut écrire notre modèle comportemental sous une forme générique :

[Math 8]

$$\begin{cases} \dot{x} = A(\boldsymbol{\theta})x + B_u(\boldsymbol{\theta})\delta_{ref} + B_w w \\ y = C_y x \end{cases}$$

Dans cette équation, $C_y$ est la matrice identité, A est une matrice dynamique, $B_u$ est une matrice de commande et $B_w$ est une matrice de perturbation, que l'on peut écrire sous la forme :

[Math 9]

$$A = \begin{bmatrix} -\frac{C_f+C_r}{mV} & 1+\frac{C_r l_r - C_f l_f}{mV^2} & 0 & 0 & 0 & \frac{C_f}{mV} & 0 & 0 \\ -\frac{C_f l_f - C_r l_r}{J} & -\frac{C_r l_r^2 + C_f l_f^2}{JV} & 0 & 0 & 0 & \frac{C_f l_f}{J} & 0 & 0 \\ 0 & 1 & 0 & 0 & 0 & 0 & 0 & 0 \\ V & l_s & V & 0 & 0 & 0 & -1 & 0 \\ 0 & 0 & 0 & 0 & -2\xi\omega & -\omega^2 & 0 & \omega^2 \\ 0 & 0 & 0 & 0 & 1 & 0 & 0 & 0 \\ 0 & 0 & 0 & 0 & 0 & 0 & -\omega_f & 0 \\ 0 & 0 & 0 & 0 & 0 & 0 & 0 & -v\alpha\boldsymbol{\theta} \end{bmatrix}, \quad B_u = \begin{bmatrix} 0 \\ 0 \\ 0 \\ 0 \\ 0 \\ 0 \\ 0 \\ v\alpha\boldsymbol{\theta} \end{bmatrix}, \quad B_w = \begin{bmatrix} 0 \\ 0 \\ 0 \\ 0 \\ 0 \\ 0 \\ \omega_f \\ 0 \end{bmatrix},$$

Le contrôleur K, qui est défini comme un retour d'état statique, peut quant à lui s'exprimer sous la forme :

[Math 10]

$$\delta_K = Kx$$

Pour trouver un contrôleur K optimal, on peut utiliser différentes méthodes.

La méthode utilisée ici est celle des inégalités matricielles linéaires. Elle est ainsi réalisée à partir de critères d'optimisation convexe sous contraintes d'inégalités matricielles linéaires.

L'objectif est plus précisément d'optimiser les gains de la boucle fermée définie par le contrôleur K en jouant sur le choix des pôles.

Les inéquations matricielles utilisées sont au nombre de trois et sont définies par les inéquations suivantes.

[Math 11]

$$A_i Q + B_i R + (A_i Q + B_i R)^T + 2\mu Q \prec 0$$

[Math 12]

$$\begin{bmatrix} -\gamma Q & A_i Q + B_i R \\ * & -\gamma Q \end{bmatrix} \prec 0$$

[Math 13]

$$\begin{bmatrix} sin(\varphi)(A_iQ + B_iR + (A_iQ + B_iR)^T) & cos(\varphi)(A_iQ + B_iR - (A_iQ + B_iR)^T) \\ * & sin(\varphi)(A_iQ + B_iR + (A_iQ + B_iR)^T) \end{bmatrix} \prec 0$$

Dans ces inéquations, l'indice i est égal à 1 ou 2, et on peut alors définir les matrices $A_i$ et $B_i$ de la façon suivante :

$$A_1 = A(\theta_{min}),$$

$$A_2 = A(\theta_{max}),$$

$$B_1 = B_u(\theta_{min}),$$

$$B_2 = B_u(\theta_{max}).$$

Une matrice de la forme $\begin{bmatrix} X & Y \\ Y^T & W \end{bmatrix}$ est écrite sous la forme $\begin{bmatrix} X & Y \\ * & W \end{bmatrix}$.

Le contrôleur K est défini par l'équation :

[Math 14]

$$K = RQ^{-1}$$

La vitesse du véhicule est supposée constante (donc toutes les matrices du système sont considérées constantes).

Les trois inéquations permettent de s'assurer que la dynamique de la boucle fermée reste limitée. En effet, grâce à ces contraintes, les pôles de la boucle fermée se retrouvent bornés dans une zone définie par un rayon $\gamma$, une distance minimale par rapport à l'axe imaginaire $\mu$, et un angle d'ouverture $\varphi$.

Cette méthode s'avère efficace lorsqu'il s'agit de déterminer à chaque instant l'angle de volant de façon raisonnable (et maîtrisable par un conducteur aux compétences moyennes) et de manière réalisable par l'actionneur. Ces contraintes assurent également la stabilité de la boucle fermée.

L'objectif est ici de minimiser le rayon $\gamma$. Une fois le contrôleur K obtenu, on peut obtenir calculer la consigne d'angle de braquage non saturée au moyen de la formule suivante :

[Math 15]

$$\delta_K = Kx = \begin{bmatrix} k_\beta & k_r & k_{\psi_L} & k_{e_{y_L}} & k_{\dot\delta} & k_\delta & k_{\dot y_{L\_ref}} & k_{\delta_{ref}} \end{bmatrix} \begin{pmatrix} \beta \\ r \\ \psi_L \\ e_{y_L} \\ \dot\delta \\ \delta \\ \dot y_{L\_ref} \\ \delta_{ref} \end{pmatrix}$$

On a introduit dans les trois inéquations matricielles les valeurs $\theta_{min}$ et $\theta_{max}$.

La valeur de $\theta$, qui est lié à l'écart entre $\delta_K$ et $\delta_{ref}$ (voir équation Math 5), reflète le niveau de violation par le contrôleur K de la limite de contrôlabilité énoncée par l'équation Math 2.

Par définition, $\theta$ est compris entre 0 (exclu) et 1 (inclus). Lorsque $\theta$ est égal à 1, la consigne non saturée d'angle au volant $\delta_K$ calculé respecte bien la limite de contrôlabilité. Lorsqu'il est proche de 0, la consigne non saturée d'angle au volant $\delta_K$ calculé présente une valeur qui impose une trop grande dynamique de braquage, ce qui génère un risque d'instabilité du véhicule. Quand $\theta$ prend des valeurs intermédiaires entre 0 et 1, la limite de contrôlabilité n'est pas respectée mais il est possible qu'il n'y pas de risque d'instabilité du véhicule.

En d'autres termes, le choix des valeurs $\theta_{min}$ et $\theta_{\_max}$ a un impact direct sur la performance et sur la robustesse du contrôleur K. Plus la plage $[\theta_{min}, \theta_{max}]$ est grande, moins le contrôleur K est performant mais plus il est robuste. Au contraire, plus cette plage est petite, plus le contrôleur K est performant mais moins il est robuste.

Logiquement la valeur $\theta_{max}$ est choisie égale à 1 (cas selon lequel le contrôleur K fonctionne en mode linéaire, comme c'est d'ailleurs généralement le cas, sans violation de contrainte de contrôlabilité).

La détermination de la valeur $\theta_{min}$ nécessite ne revanche de faire un compromis entre performance et robustesse. La détermination de cette valeur revient à imposer un seuil maximal pour l'écart, en valeur absolue, entre $\delta_K$ et $\delta_{ref}$ (voir équation Math 5).

Pour bien illustrer ce choix, on a représenté sur la figure 4 la variation de la valeur de $\theta$ en fonction de l'écart entre $\delta_K$ et $\delta_{ref}$. Dans cet exemple, la valeur $\theta_{min}$ a été choisie égale à 0,2.

En résumé, la méthode permettant de calculer le contrôleur K qui convienne à un modèle particulier de véhicule automobile consiste à se fixer des valeurs de v, $\alpha$, $\theta_{min}$ et $\theta_{max}$.

Elle consiste ensuite à déterminer les coefficients des matrices $A_i$, $B_i$, puis à résoudre les équations Math 11 à Math 13 afin d'en déduire un contrôleur K qui assure un bon suivi de la trajectoire d'évitement T0 et qui satisfait le modèle limiteur de variation de consigne.

Ce contrôleur K peut alors être implémenté dans les calculateurs 13 des véhicules automobiles 10 de la gamme.

A ce stade, on peut décrire le procédé qui sera exécuté par le calculateur 13 d'un de ces véhicules automobiles pour mettre en œuvre l'invention.

Le calculateur est ici programmé pour mettre en œuvre ce procédé de façon récursive, c'est-à-dire pas à pas, et en boucle.

Pour cela, au cours d'une première étape, le calculateur 13 tente de détecter la présence d'un éventuel obstacle se trouvant sur le trajet du véhicule automobile 10. Il utilise pour cela son télédétecteur RADAR ou LIDAR.

En l'absence d'obstacle, cette étape est répétée en boucles.

Dès qu'un obstacle 20 est détecté (voir figure 2), le calculateur 13 planifie une trajectoire d'évitement T0 permettant d'éviter cet obstacle 20.

Le calculateur 13 va alors chercher à définir une consigne de pilotage pour le système de direction conventionnel 14, à savoir une consigne saturée d'angle de braquage $\delta_{ref}$, permettant de suivre au mieux cette trajectoire d'évitement T0.

Il commence pour cela par calculer ou mesurer les paramètres que sont :

- l'angle de braquage mesuré $\delta$,
- la dérivée par rapport au temps de l'angle de braquage mesuré $\delta$,
- la consigne saturée d'angle de braquage $\delta_{ref}$ obtenue au pas de temps précédent,
- la vitesse de lacet r
- l'angle relatif de cap $\Psi_L$,
- la dérivée par rapport au temps de la consigne d'écart latéral $y_{L\text{-}ref}$,
- l'erreur de suivi de trajectoire $e_{yL}$,
- l'angle de dérive $\beta$.

Le calculateur 13 utilise ensuite le contrôleur K enregistré dans sa mémoire. Ce contrôleur K va donc permettre de déterminer, au cours d'une première étape E1, les valeurs des consignes d'angles de braquage non saturée $\delta_K$ et saturée $\delta_{ref}$.

La consigne d'angle de braquage saturée $\delta_{rer}$ va alors être transmise à l'actionneur permettant de braquer les roues du véhicule automobile 10.

Puis, au cours d'une seconde étape E2, le calculateur 13 détermine la valeur de $\theta$, au moyen de l'équation Math 5. Il est généralement égal à 1 ou proche de 1. Il peut toutefois arriver qu'en présence de perturbations, il s'écarte de cette valeur.

Alors, au cours d'une étape E3, le calculateur 13 vérifie que la valeur de $\theta$ est bien supérieure au seuil $\theta_{min}$ qui a été fixé et qui est donc enregistré comme une constante dans sa mémoire.

Si tel est bien le cas, au cours d'une étape E4, le calculateur décide de maintenir le processus de pilotage du braquage du véhicule afin d'éviter l'obstacle 20.

Dans le cas contraire, au cours d'une étape E5, le calculateur décide de suspendre le processus de pilotage du braquage du véhicule. Alors, on peut imaginer que le véhicule effectue un freinage d'urgence et/ou qu'il reprenne le processus de pilotage du braquage du véhicule dès lors que les conditions de stabilité sont à nouveau remplies.

Ce cas peut notamment arriver en présence d'anomalies (défaillance des capteurs, du système de direction assistée, comportements du véhicule et/ou du conducteur non gérable par le contrôleur K...). Ainsi l'invention permet-elle en outre de détecter une possible défaillance d'un capteur.

La présente invention n'est nullement limitée au mode de réalisation décrit et représenté, mais l'homme du métier saura y apporter toute variante conforme à l'invention.

Ainsi, le procédé pourra s'appliquer à d'autres types de domaines dans lesquels une trajectoire particulière doit être suivie, par exemple en aéronautique ou en robotique (notamment lorsque le robot est petit et qu'il faut saturer l'une de ses commandes).

Par fonction tangente hyperbolique on entend les différentes fonctions ayant une forme proche de la tangente hyperbolique, ce qui inclut notamment les fonctions trigonométriques inverses (telle que arctangente), la fonction d'erreur (couramment notée erf), la fonction Gudermannian (couramment notée gd) et la fonction trigonométrique hyperbolique (telle que tangente hyperbolique).

Comme déjà évoqué, le seuil $\theta_{min}$ est strictement inférieur au seuil $\theta_{max}$, si bien que la condition souple de saturation peut être mise en oeuvre puisqu'il existe une plage de plusieurs valeurs comprises entre $\theta_{min}$ et $\theta_{max}$. Cette condition souple de saturation fait que le contrôleur K tolère le dépassement de la contrainte de saturation tout en garantissant la stabilité du système en boucle fermée, ce qui permet d'obtenir de meilleures performances. En effet, la sortie non saturée du contrôleur K, c'est à dire $\delta_K$, peut dépasser la contrainte de saturation sans aucun risque d'instabilité et de perte de performance. Le contrôleur K génère alors une consigne non saturée $\delta_K$ en angle de braquage, et non pas une consigne en vitesse de braquage, qui prend en compte la consigne d'angle saturé $\delta_{ref}$, tel que cela apparaît dans l'équation Math 6. Ainsi, la consigne de pilotage $\delta_{ref}$ est une consigne saturée d'angle de braquage de chaque roue directrice 11 en ce que la première dérivée de la consigne de pilotage $\dot{\delta}_{ref}$, c'est-à-dire la vitesse de braquage, est saturée.

**Revendications**

1. Procédé de pilotage autonome d'une mobilité d'un appareil (10) automobile qui est adaptée à influer sur la trajectoire dudit appareil (10), l'appareil (10) étant un véhicule automobile qui est adapté à rouler sur route et qui comprend au moins une roue directrice (11), ladite mobilité correspondant à la capacité de chaque roue directrice (11) à braquer, comportant des étapes de :

   - acquisition de paramètres ($\beta$, r, $\Psi_L$, $e_{yL}$, $\delta$, $\delta_{ref}$) relatifs à la trajectoire de l'appareil (10), et de
   - calcul d'une nouvelle consigne de pilotage ($\delta_{ref}$) de la mobilité de l'appareil en fonction desdits paramètres ($\beta$, r, $\Psi_L$, $e_{yL}$, $\delta$, $\delta_{ref}$), au moyen d'un contrôleur (K) qui satisfaisait un modèle limiteur de variation de la consigne de pilotage ($\delta_{ref}$), la consigne de pilotage ($\delta_{ref}$) étant une consigne saturée d'angle de braquage de chaque roue directrice (11), **caractérisé en ce que**, le modèle limiteur comprenant une fonction tangente hyperbolique de l'écart entre la consigne non saturée de l'angle de braquage ($\delta_K$) et la consigne saturée de l'angle de braquage ($\delta_{ref}$), il est prévu de :
   - déterminer, au moyen du contrôleur (K), une consigne non saturée de l'angle de braquage ($\delta_K$) qui ne satisfaisait pas ledit modèle limiteur,
   - calculer une valeur ($\theta$) liée à l'écart entre la consigne saturée d'angle de braquage et la consigne non saturée de l'angle de braquage ($\delta_K$) à l'aide de ladite fonction tangente hyperbolique, et
   - de maintenir ou suspendre le procédé en fonction du résultat d'une comparaison entre ladite valeur ($\theta$) et un seuil ($\theta_{min}$) fixé.

2. Procédé selon la revendication précédente, dans lequel ladite valeur ($\theta$) est calculée au moyen de l'expression mathématique :

$$\theta = \frac{tanh\left(\alpha\left(\delta_K - \delta_{ref}\right)\right)}{\alpha\left(\delta_K - \delta_{ref}\right)}$$

   où $\alpha$ est une constante prédéterminée,
   $\delta_K$ est la consigne non saturée de l'angle de braquage, et
   $\delta_{ref}$ est la consigne saturée de l'angle de braquage.

3. Procédé selon l'une des revendications précédentes, dans lequel les paramètres ($\beta$, r, $\Psi_L$, $e_{yL}$, $\delta$, $\delta_{ref}$) comprennent au moins une vitesse de lacet (r) de l'appareil (10) et/ ou un angle relatif de cap ($\Psi_L$) entre l'axe longitudinal de l'appareil (10) et une tangente à la trajectoire.

4. Procédé comprenant :

¤ l'élaboration d'un contrôleur (K) en vue de son utilisation dans un procédé de pilotage autonome conforme à l'une des revendications précédentes, dans lequel il est prévu de :

- acquérir un modèle matriciel comportemental de l'appareil (10),
- déterminer une partie au moins des coefficients des matrices ($A_i$, $B_i$) du modèle matriciel comportemental,
- en déduire un contrôleur (K) qui satisfait le suivi d'une trajectoire à emprunter et un modèle limiteur de variation de consigne de pilotage ($\delta_{ref}$), et

¤ l'utilisation dudit contrôleur (K) dans un procédé de pilotage autonome conforme à l'une des revendications précédentes.

5. Procédé d'élaboration selon la revendication précédente, dans laquelle le contrôleur (K) est déterminé à partir de critères d'optimisation convexe sous contraintes d'inégalités matricielles linéaires.

6. Appareil (10) automobile comprenant au moins une mobilité qui est adaptée à influer sur la trajectoire dudit appareil (10), un actionneur pour commander ladite mobilité, et un calculateur pour piloter ledit actionneur, **caractérisé en ce que** le calculateur est adapté à mettre en œuvre un procédé selon l'une des revendications 1 à 3.

7. Appareil selon la revendication précédente, formé par un véhicule automobile adapté à rouler sur route et comprenant au moins une roue directrice (11), dans lequel ladite mobilité correspond à la capacité de chaque roue directrice (11) à braquer.

**Patentansprüche**

1. Verfahren zur autonomen Steuerung der dazu ausgelegten Mobilität einer selbstfahrenden Vorrichtung (10), auf die Fahrtstrecke der Vorrichtung (10) Einfluß zu nehmen, wobei die Vorrichtung (10) ein selbstfahrendes Fahrzeug ist, das dazu ausgelegt ist, auf einer Straße zu fahren, und das mindestens ein lenkbares Rad (11) aufweist, wobei die Mobilität der Fähigkeit jedes lenkbaren Rads (11) entspricht, einzuschlagen, mit den Schritten:

- Erfassen von auf die Fahrtstrecke der Vorrichtung (10) bezogenen Parametern ($\beta$, r, $\Psi_L$, $e_{yL}$, $\delta$, $\delta_{ref}$) und
- Berechnen einer neuen Steuerungsanweisung ($\delta_{ref}$) für die Mobilität der Vorrichtung in Abhängigkeit von den Parametern ($\beta$, r, $\Psi_L$, $e_{yL}$, $\delta$, $\delta_{ref}$) mittels einer Steuerung (K), die ein Variationsbegrenzungsmodell für die Steuerungsanweisung ($\delta_{ref}$) erfüllt hat, wobei die Steuerungsanweisung ($\delta_{ref}$) eine mit dem Einschlagwinkel jedes lenkbaren Rads (11) gesättigte Anweisung ist, **dadurch gekennzeichnet, daß** das Begrenzungsmodell eine hyperbolische Tangensfunktion der Abweichung zwischen der nicht gesättigten Lenkwinkelanweisung ($\delta_K$) und der gesättigten Lenkwinkelanweisung ($\delta_{ref}$) aufweist und daß vorgesehen ist:
- mittels der Steuerung (K) eine nicht gesättigte Lenkwinkelanweisung ($\delta_K$) zu bestimmen, die das Begrenzungsmodell nicht erfüllt hat,
- mittels der hyperbolischen Tangensfunktion einen an die Abweichung zwischen der gesättigten Lenkwinkelanweisung und der nicht gesättigten Lenkwinkelanweisung ($\delta_K$) gebundenen Wert ($\theta$) zu berechnen, und
- das Verfahren in Abhängigkeit vom Ergebnis eines Vergleichs zwischen dem Wert ($\theta$) und einem festgelegten Schwellenwert ($\theta_{min}$) weiterzuführen oder abzubrechen.

2. Verfahren gemäß dem vorangehenden Anspruch, bei dem der besagte Wert ($\theta$) mittels der mathematischen Formel

$$\theta = \frac{\tanh\left(\alpha\left(\delta_K - \delta_{ref}\right)\right)}{\alpha\left(\delta_K - \delta_{ref}\right)}$$

berechnet wird,

wobei $\alpha$ eine vorbestimmte Konstante ist,
$\delta_K$ die nicht gesättigte Lenkwinkelanweisung ist und
$\delta_{ref}$ die gesättigte Lenkwinkelanweisung ist.

3. Verfahren gemäß einem der vorangehenden Ansprüche, bei dem die Parameter ($\beta$, r, $\Psi_L$, $e_{yL}$, $\delta$, $\delta_{ref}$) mindestens eine Giergeschwindigkeit (r) der Vorrichtung (10) und/oder einen relativen Kurswinkel ($\Psi_L$) zwischen der Längsachse der Vorrichtung (10) und einer Tangente an der Fahrtstrecke aufweisen.

4. Verfahren mit:

¤ Erarbeiten einer Steuerung (K) hinsichtlich ihrer Verwendung in einem Verfahren zur autonomen Steuerung gemäß einem der vorangehenden Ansprüche, bei dem vorgesehen ist:

- ein Matrixmodell des Verhaltens der Vorrichtung (10) zu erfassen,
- mindestens einen Teil der Koeffizienten der Matrizen ($A_i$, $B_i$) des Matrixmodells des Verhaltens zu bestimmen,
- daraus eine Steuerung (K), die dem Verfolgen einer zu nehmenden Fahrtstrecke gerecht wird, und ein Begrenzungsmodell für die Steuerungsanweisung ($\delta_{ref}$) abzuleiten, und

¤ Verwendung der Steuerung (K) in einem Verfahren zur autonomen Steuerung gemäß einem der vorangehenden Ansprüche.

5. Erarbeitungsverfahren gemäß dem vorangehenden Anspruch, bei dem die Steuerung (K) aus konvexen Optimierungskriterien unter linearen matrixartigen Ungleichheitsbelastungen bestimmt wird.

6. Selbstfahrende Vorrichtung (10) mit mindestens einer Mobilität, die dazu ausgelegt ist, die Fahrtstrecke der Vorrichtung (10) zu beeinflussen, einem Stellglied zum Steuern der Mobilität und einem Rechner zum Steuern des Stellglieds, **dadurch gekennzeichnet, daß** der Rechner zum Durchführen eines Verfahrens gemäß einem der Ansprüche 1 bis 3 ausgelegt ist.

7. Vorrichtung gemäß dem vorangehenden Anspruch, die durch ein selbstfahrendes Fahrzeug gebildet ist, das dazu ausgelegt ist, auf einer Straße zu fahren, und mindestens ein lenkbares Rad (11) aufweist, wobei die Mobilität der Fähigkeit jedes lenkbaren Rads (11) entspricht, einzuschlagen.

**Claims**

1. Method for autonomously controlling a mobility of an automative apparatus (10) that is adapted to have an influence the path of said apparatus (10), the apparatus (10) being an automotive vehicle that is adapted to travel on the road and that comprises at least one steerable wheel (11), said mobility corresponding to the capacity of each steerable wheel (11) to be steered, comprising the steps of:

- acquiring parameters ($\beta$, r, $\Psi_L$, $e_{yL}$, $\delta$, $\delta_{ref}$) relative to the path of the apparatus (10), and
- calculating of a new control setpoint ($\delta_{ref}$) of the mobility of the apparatus depending on said parameters ($\beta$, r, $\Psi_L$, $e_{yL}$, $\delta$, $\delta_{ref}$), by means of a controller (K) which satisfied a model that limits the variation of the control setpoint ($\delta_{ref}$), the control setpoint ($\delta_{ref}$) being a saturated setpoint of steering angle of each steerable wheel (11), **characterised in that**, the limiting model comprising a hyperbolic tangent function of the difference between the unsaturated setpoint of the steering angle ($\delta_K$) and the saturated setpoint of the steering angle ($\delta_{ref}$), it is planned to:
- determine, by means of the controller (K), an unsaturated setpoint of the steering angle ($\delta_K$) which did not satisfy said limiting model,
- calculate a value ($\theta$) related to the difference between the saturated steering angle setpoint and the unsaturated steering angle setpoint ($\delta_K$) using said hyperbolic tangent function, and
- hold or suspend the process according to the result of a comparison between said value ($\theta$) and a set threshold ($\theta_{min}$).

2. Method according to the preceding claim, wherein said value ($\theta$) is calculated by means of the mathematical expression:

$$\theta = \frac{tanh\left(\alpha\left(\delta_K - \delta_{ref}\right)\right)}{\alpha\left(\delta_K - \delta_{ref}\right)}$$

where a is a predetermined constant,

$\delta_K$ is the unsaturated setpoint of the steering angle, and

$\delta_{ref}$ is the saturated setpoint of the steering angle.

3. 11. Method according to any one of the preceding claims, wherein:

the parameters ($\beta$, r, $\Psi_L$, $e_{yL}$, $\delta$, $\delta_{ref}$) comprise at least one yaw rate (r) of the apparatus (10) and/or a relative heading angle ($\Psi_L$) between the longitudinal axis of the apparatus (10) and a tangent to the path.

4. Method, comprising the steps of:

- designing a controller (K) for use in an autonomous control method according to any one of the preceding claims, wherein it is planned to:
- acquire a behavioral matrix model of the apparatus (10),
- determine at least a part of the coefficients of the matrices ($A_i$, $B_i$) of the behavioural matrix model,
- deduce therefrom a controller (K) which satisfies the tracking of a path to be taken and a control setpoint variation limiting model ($\delta_{ref}$), and the use of said controller (K) in an autonomous control method according to any one of the preceding claims.

5. Designing method according to the preceding claim, wherein the controller (K) is determined from convex optimisation criteria under linear matrix inequalities constraints.

6. Automotive apparatus (10) comprising at least one mobility that is adapted to influence the path of said apparatus (10), an actuator for controlling said mobility, and a computer for controlling said actuator, **characterised in that** the computer is adapted to implement a method according to any one of claims 1 to 3.

7. Apparatus according to the preceding claim, formed by an automotive vehicle adapted to travel on a road and comprising at least one steerable wheel (11), wherein said mobility corresponds to the ability of each steerable wheel (11) to steer.

**Fig.1**

**Fig.2**

**Fig.3**

**Fig.4**

**Fig.5**

**Fig.6**